# EUROPEAN PATENT SPECIFICATION

(11) **EP 4 432 379 B1**
(45) Date of publication and mention of the grant of the patent: **04.02.2026**
(21) Application number: 22893215.8
(22) Date of filing: 10.11.2022
(51) Int. Cl.: H01M 4/04, H01M 4/139, B05C 9/12, B30B 11/16, B30B 3/04

(54) **ELECTRODE MANUFACTURING DEVICE FOR MANUFACTURING ELECTRODE OF SECONDARY BATTERY**
ELEKTRODENHERSTELLUNGSVORRICHTUNG ZUR HERSTELLUNG VON ELEKTRODEN FÜR SEKUNDÄRBATTERIEN
DISPOSITIF DE FABRICATION D'ÉLECTRODES POUR LA FABRICATION D'ÉLECTRODES DE BATTERIES SECONDAIRES

(30) Priority: 11.11.2021 KR 20210155217; 15.04.2022 KR 20220046994
(43) Date of publication of application: 18.09.2024
(73) Proprietor: LG Energy Solution, Ltd., Seoul 07335 (KR)
(72) Inventor: KIM, Sue Jin, Yuseong-gu Daejeon 34122 (KR); RYU, Duk Hyun, Yuseong-gu Daejeon 34122 (KR); LEE, Kwanhee, Yuseong-gu Daejeon 34122 (KR); JANG, Jinsu, Yuseong-gu Daejeon 34122 (KR); LEE, Yunju, Yuseong-gu Daejeon 34122 (KR); PARK, Geunho, Yuseong-gu Daejeon 34122 (KR); SON, Seungyeon, Yuseong-gu Daejeon 34122 (KR)
(74) Representative: Goddar, Heinz J.
(86) International application number: PCT/KR2022/017614
(87) International publication number: WO 2023/085796

(56) References cited:
- CN-A- 110 890 519
- CN-U- 203 410 045
- JP-A- H0 528 990
- KR-A- 20130 001 294
- KR-A- 20160 087 115
- KR-A- 20160 141 448
- KR-A- 20160 141 448
- KR-A- 20200 046 788
- KR-A- 20200 069 906
- KR-B1- 102 261 491
- US-A1- 2018 226 630

## Description

### [Technical Field]

The present disclosure relates to an electrode manufacturing device including a roll for manufacturing an electrode of a secondary battery, and in particular, a roll structure in which despite a difference between a thickness of an area to which an active material layer is applied, and a thickness of an area to which an active material layer is not applied, in an electrode, elongation can be performed uniformly, and deformation of the electrode can be prevented during a transfer, after the elongation.

### [Background Art]

Improvement in the development of technologies for mobile devices and a growing demand for mobile devices lead to an increase in the demand for secondary batteries as an energy source. In recent years, secondary batteries have been used as an energy source of electric vehicles (EV) and hybrid electric vehicles (HEV). Among secondary batteries, lithium secondary batteries having high energy density, and high discharge voltage and high output reliability are in high demand.

Secondary batteries can be categorized based on the structure of an electrode assembly comprised of an anode/a separation layer/a cathode. Secondary batteries can be typically classified as a jelly roll (winding)-type electrode assembly in which long sheet-shaped anode and cathode are wound in the state where a separation layer is interposed therebetween, a stack (pile)-type electrode assembly in which a plurality of anodes and a plurality of cathodes that are cut based on a predetermined size unit are consecutively stacked in the state where a separation layer is interposed therebetween, a stack folding-type electrode assembly in which unit cells, which are stacked in the state where a separation layer is interposed between anodes and cathodes of a predetermined unit, e.g., Bi-cells or Full cells, are wound, and the like.

To manufacture the electrode assemblies, a sheet-shaped electrode corresponding to an anode and a cathode needs to be manufactured. The sheet-shaped electrode is provided with a coating where an active material layer is applied or coated to the surface of the sheet, and an uncoating where an active material layer is not applied to the surface of the sheet. The sheet-shaped electrode is manufactured from a long metal sheet having a width and a length greater than that of the sheet-shaped electrode. Accordingly, the sheet-shaped electrode is manufactured in the form of multi lanes that are elongated along a transfer direction. In the electrode sheet in the form of multi lanes, a plurality of uncoatings is elongated in a lengthwise direction, and spaced in a widthwise direction.

In the electrode sheet, there is a difference in the thickness of the portion to which an active material layer is applied, and the thickness of the portion to which an active material layer is not applied. Accordingly, when the multi-lane electrode sheet is rolled in a rolling roll, the elongation amount of the coating and the elongation amount of the uncoating differ, causing wrinkles or deformation of the uncoating. While the electrode sheet having the deformed uncoating travels to a transfer roll, the wrinkles or deformation of the uncoating can be worsened, and the uncoating can even be folded and cut.

A technology for responding to a difference between the elongation amount of an uncoating and the elongation amount of a coating of an electrode sheet, with a step provided at a roll, is disclosed in US 2015-0360268 A1 and KR 10 2261491 B1, to respond to a difference between the thickness of the uncoating and the thickness of the coating. The step, corresponding to a difference in the thicknesses of the uncoating and the coating geometrically and being provided at the roll, immediately removes wrinkles that is formed at the uncoating and caused by a difference in the elongation amounts, but not prevent the wrinkles themselves at the uncoating. KR 2016 0 141 448 A describes an electrode rolling apparatus that can prevent the swell or wrinkle of the electrode sheet due to rolling, by rolling not an electrode coating layer but the uncoated portions of the current collector on which the electrode coating layer is not formed, in a second rolling step following a first rolling step wherein a pressure is only applied to the electrode coating layer.

Unless the problem of a difference between the elongation amount of the metal foil of the coating area of the electrode sheet and the elongation amount of the metal foil of the uncoating area of the electrode sheet, which is made as the electrode sheet passes the rolling roll, is not solved, deformation caused by the difference occurs again, while the electrode sheet continues to travel.

Further, in the case where the thickness of an active material layer of an electrode sheet to be manufactured changes, the roll described above needs to be replaced. Further, in the case where the position of an uncoating of the electrode sheet, i.e., the position of the lane of the electrode sheet, changes, the roll also needs to be replaced. Furthermore, each time an electrode sheet having multi lanes of a different dimension is manufactured, the roll needs to be manufactured to correspond to the dimension.

### [Description of Invention]

### [Technical Problems]

The objective of the present disclosure is to provide a roll capable of preventing the occurrence of wrinkles of an uncoating fundamentally, which is caused by a difference between the thickness of the uncoating and the thickness of a coating, when an electrode is elongated, and an electrode manufacturing device using the same.

The objective of the present disclosure is to provide a roll capable of flexibly responding to a changed electrode sheet, with no need to manufacture a roll respectively corresponding to the changed electrode sheet, even if the thickness of an active material layer of the electrode sheet to be processed changes or the position or the width and the like of an uncoating changes, and an electrode manufacturing device using the same.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### [Technical Solutions]

In the present disclosure, provided is an electrode manufacturing device for rolling and transfering a sheet-shaped electrode in which an active material layer is applied to at least any one of a metal foil with a first surface and a second surface which is a back surface of the first surface according to claim 1.

The electrode manufacturing device comprises a rolling roll rolling the electrode, and a travel roll rolling and then transferring the electrode.

Additionally, a pair of rolling rolls may be provided. The electrode is pressurized and rolled while passing between the pair of rolling rolls.

Further, at least one or a plurality of travel rolls may be provided.

Each of the travel rolls may contact any one of the first surface and the second surface of the electrode.

The travel rolls may be disposed on and under the electrode, in different positions, in the travel direction of the electrode.

The travel rolls may be disposed on and under the electrode, in the same position, in the travel direction of the electrode.

The electrode may comprise a coating area where the active material layer is applied to the surface of a metal foil, and an uncoating area where the active material layer is not applied to the surface of the metal foil.

The coating and uncoating areas may be provided on the first surface of the electrode.

The coating and uncoating areas may be provided on the second surface of the electrode.

The coating and uncoating areas may be provided on both the first surface and the second surface of the electrode. At this time, the uncoating and coating areas provided on the first surface and the second surface may correspond to each other.

The uncoating area may be elongated in the travel direction (lengthwise direction) of the electrode.

A plurality of uncoating areas may be spaced from one another along the widthwise direction of the electrode.

In the electrode, the thickness of the uncoating area may be less than the thickness of the coating area.

In an example not forming part of the present invention, at least any one of the rolling roll and the at least one travel roll may be provided with a base surface having a predetermined diameter, and a step surface having a diameter of the step ring being than the diameter of the base surface.

In an example not forming part of the present invention, the rolling roll may be provided with both the base surface and the step surface, and the travel roll may be provided only with the base surface rather than the step surface.

In another example not forming part of the present invention, the rolling roll may be provided only with the base surface rather than the step surface, and the at least one travel roll may be provided with both the base surface and the step surface.

The rolling roll is provided with both the base surface and the step surface, and the at least one travel roll is also provided with both the base surface and the step surface.

In another example, the at least one travel roll is a plurality of travel rolls, and among the plurality of travel rolls, one or more first travel rolls disposed near the rolling roll may be provided with both the base surface and the step surface, and second travel rolls disposed behind the one or more first travel rolls in a travel direction of the electrode may be provided only with the base surface.

The step surface may be provided, in a ring shape, in a position corresponding to the position of the uncoating area of the electrode.

The roll may be provided with a base roll having a predetermined diameter; and a step ring being coupled to the outer circumference of the base roll.

The base roll may have a cylindrical base surface, at the outer circumference thereof.

The step ring may be provided with a step surface having an outer circumferential surface, the diameter of which is greater than the diameter of the base surface.

A step between the base surface and the step surface may correspond to a step between the coating and the uncoating, i.e., a step between the surface of the active material layer and the surface of the metal foil exposed. Accordingly, the linear velocity of the step surface of the roll rotating at the same rotation speed may be greater than the linear velocity of the base surface. That is, the linear velocity of the base surface contacting the surface of the coating may be greater than the linear velocity of the step surface contacting the surface of the uncoating. Since greater tension is applied to the metal foil of the uncoating than the metal foil of the coating by a difference between the linear velocity of the step surface and the linear velocity of the base surface, in the case where the linear velocity of the step surface contacting the surface of the uncoating is greater than the linear velocity of the base surface contacting the surface of the coating, the elongation amount of the metal foil of the uncoating may increase further.

In the rolling roll, a step between the base surface and the step surface may be less than a step between the coating and the uncoating. Accordingly, the base surface's pressurization against the coating may be great, and rolling may be performed smoothly.

In an example not forming part of the present invention, the rolling roll may be provided only with the base surface. Accordingly, the base surface's pressurization against the coating may be great, and rolling may be performed smoothly.

In the travel roll, a step between the base surface and the step surface may be greater than a step between the coating and the uncoating. Accordingly, the step surface's pressurization against the uncoating may increase, and the elongation amount of the uncoating may increase, such that a difference between the elongation amount of the metal foil of the coating area and the elongation amount of the metal foil of the uncoating area, which is caused while the electrode passes the rolling roll, is reduced.

The travel roll provided with both the base surface and the step surface may be disposed right after the rolling roll.

In the case where the travel roll provided with both the base surface and the step surface reduces a difference between the elongation amount of the metal foil of the coating and the elongation amount of the metal foil of the uncoating, at a predetermined rate or greater, the travel roll provided only with the base surface may be disposed in a following travel path.

The predetermined rate may be determined within the range where the uncoating is not deformed, in a travel process, due to a difference between the elongation amount of the metal foil of the coating and the elongation amount of the metal foil of the uncoating.

In an example not forming part of the present invention, in the roll, the base surface may be defined by the base roll, and the step surface may be defined by the step ring.

The base surface may contact the surface of the coating, and the step surface may contact the uncoating.

The position of the step ring may correspond to the portion of the uncoating area of the electrode contacted by the roll.

The width of the step ring may correspond to the width of the uncoating area corresponding to the step ring, or may be less than the width of the uncoating by 1 mm or so.

A frictional coefficient at the outer circumference of the step ring may be greater than the frictional coefficient at the outer circumference of the base roll.

A greater frictional coefficient of the step surface than that of the base surface, and a greater frictional coefficient of the surface of the active material layer of the electrode than that of the surface of the metal foil may be complementary.

Accordingly, a frictional coefficient between the base surface and the active material layer, and a frictional coefficient between the step surface and the metal foil may be balanced. Accordingly, a difference between the rolling rate of the coating and the rolling rate of the uncoating may decrease further.

The roll's above-described structure where the frictional coefficient of the step ring is greater than the frictional coefficient of the base surface may be applied to the rolling roll, for example.

A frictional coefficient at the outer circumference of the step ring may be less than a frictional coefficient at the outer circumference of the base roll.

Accordingly, force that is transferred to the electrode sheet, based on the rotational force of the roll, does not concentrate on the uncoating of a relatively narrow width, to prevent the excessive deformation of the uncoating and ensure the durability of the step ring.

The roll structure in which the frictional coefficient of the step ring is less than the frictional coefficient of the base surface may be applied to the travel roll, for example.

The elastic modulus of the step ring may be less than the elastic modulus of the base roll. In the case where the structure is applied to the rolling roll, the rolling effect may improve further. In the case where the structure is applied to the travel roll, the excessive deformation of the uncoating may be prevented, and the durability of the step ring may be ensured.

The base roll may comprise a first metallic material, and the step ring may comprise a second metallic material that is softer than the first metallic material. Alternatively, the base roll may comprise a metallic material, and the step ring may comprise a synthetic resin material.

Thus, since the rolling rate of the uncoating improves, a difference between the rolling rate of the coating and the rolling rate of the uncoating may decrease further.

The base roll and the step ring may be provided as an individual component.

Accordingly, the step ring may be detachably coupled to the base roll.

The roll may be manufactured in a way that a step ring is disposed at the outer circumference of a base roll that is ready.

The step ring may adhere to and be attached to the base roll.

The step ring may be a band wound around the base roll at least once.

The band may be made of a material coated with polytetrafluoroethylene (PTFE).

The step ring may be fitted onto the base roll by increasing the inner diameter of the step ring, and may be fixed to the base roll in a way that the inner diameter of the step ring decreases to allow the step ring to be recovered elastically.

The step ring may be press-fitted to the outer circumference of the base roll in an axial direction. For convenience of the press fit, the step ring may be made of a material that is softer than the base roll.

The step ring may be fitted into the base roll in the state where the step ring is thermally expanded in a way that the inner diameter of the step ring increases, and may be fixed to the base roll by cooling in a way that the inner diameter of the step ring decreases. For convenience of the shrinkage fitting, the base roll may comprise a first metallic material, and the step ring may comprise a second metallic material having a greater thermal expansion coefficient than a thermal expansion coefficient of the first metallic material.

According to the present disclosure, the roll of the electrode manufacturing device may be exchanged depending on the dimension and shape of the electrode wound by the roll.

A method of exchanging the roll of the electrode manufacturing device not forming part of the present invention comprises a step ring removal step of separating the step ring in the state of being coupled to the base roll from the base roll, and a step ring re-installment step of coupling another step ring to the base roll.

In the step ring removal step, an adhesion layer or an attachment layer between the inner circumferential surface of the step ring and the outer circumferential surface of the base roll may be removed.

In the step ring removal step, the step ring may be removed from the base roll in the state where the step ring is elastically or thermally deformed in a way that the diameter of the step ring increases.

In the step ring removal step, the step ring may be extruded from the base roll in the axial direction.

In the step ring re-installment step, the inner circumferential surface of the step ring and the outer circumferential surface of the base roll may adhere to each other or be attached to each other.

In the step ring re-installment step, the step ring may be fitted into the base roll in the state where the step ring is elastically or thermally deformed in a way that the diameter of the step ring increases.

In the step ring re-installment step, the step ring may be press-fitted into the base roll, in the axial direction.

### [Advantageous Effects]

According to the present disclosure, the complementary elongation of an uncoating and a coating that have a different elongation rate, while passing a rolling roll, is ensured in a travel roll following the rolling roll, thereby preventing the occurrence of wrinkles of a metal foil of the uncoating.

According to the present disclosure, the size of a step between a base surface and a step surface is determined, the frictional coefficient of the base surface and the frictional coefficient of the step surface differ, and the elastic modulus of a base roll and the elastic modulus of a step ring differ, to be suitable for properties of a rolling roll and a travel roll, thereby prevent the occurrence of wrinkles of an uncoating fundamentally.

According to the present disclosure, since a base roll constituting a base surface and a step ring constituting a step surface are detachably provided to form a roll, the roll is easily formed to correspond to a changed electrode sheet, even if the thickness of an active material layer of an electrode sheet to be processed changes or the position or width and the like of an uncoating changes, thereby cutting down cumbersome procedures in which a different roll is required each time the dimension or shape of an electrode changes.

Specific effects are described along with the above-described effects in the section of detailed description.

### [Brief Description of Drawings]

FIG. 1 is a perspective view showing an example of an electrode that will experience rolling performed by an electrode manufacturing device according to the present disclosure, and FIG. 2 is a plan view of FIG. 1.
FIGS. 3 and 4 are perspective views showing a state in which electrodes travel in the electrode manufacturing device according to the present disclosure, and a state where the electrodes are omitted, viewed in a first direction.
FIGS. 5 and 6 are perspective views showing the state in which electrodes travel in the electrode manufacturing device according to the present disclosure, and the state where the electrodes are omitted, viewed in a second direction different from the first direction.
FIGS. 7 and 8 are a side view and a plan view showing the state in which electrodes travel in the electrode manufacturing device according to the present disclosure, viewed respectively from the side and from above.
FIGS. 9 to 11 are views showing the first to third examples of the process of assembling a base roll of a roll of the electrode manufacturing device to a step ring.

### [Description of reference numerals]

10: Electrode 12: Uncoating 13: Coating 20: Metal foil 21: First surface 22: Second surface 30: Active material layer 40: Roll 41: Base roll 413: Base surface 42: Step ring 422: Step surface A: Rolling roll B: Travel roll C: Tension roll

### [Detailed Description of Exemplary Embodiments]

The above-described aspects, features and advantages are specifically described hereafter with reference to the accompanying drawings such that one having ordinary skill in the art to which the present disclosure pertains can embody the technical matter of the disclosure easily. In the disclosure, detailed description of known technologies in relation to the subject matter of disclosure is omitted if it is deemed to make the gist of the disclosure unnecessarily vague. Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component, unless stated to the contrary.

Throughout the disclosure, each component can be provided as a single one or a plurality of ones, unless explicitly stated to the contrary.

When any one component is described as being "in the upper portion (or lower potion)" or "on (or under)" another component, any one component can be directly on (or under) another component, but an additional component can be interposed between any one component and another component on (or under) any one component.

When any one component is described as being "connected", "coupled", or "connected" to another component, any one component can be directly connected or coupled to another component, but an additional component can be "interposed" between the two components or the two components can be "connected", "coupled", or "connected" by an additional component.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

Throughout the disclosure, the phrase "A and/or B" as used herein can denote A, B or A and B, and the phrase "C to D" can denote C or greater and D or less, unless stated to the contrary.

Hereafter, preferred embodiments according to the present disclosure are described with reference to the accompanying drawings.

In description of the embodiments, the lengthwise direction of an electrode denotes a direction in which the electrode travels and is transferred, and the widthwise direction of an electrode corresponds to the width of a roll.

### <Electrode sheet>

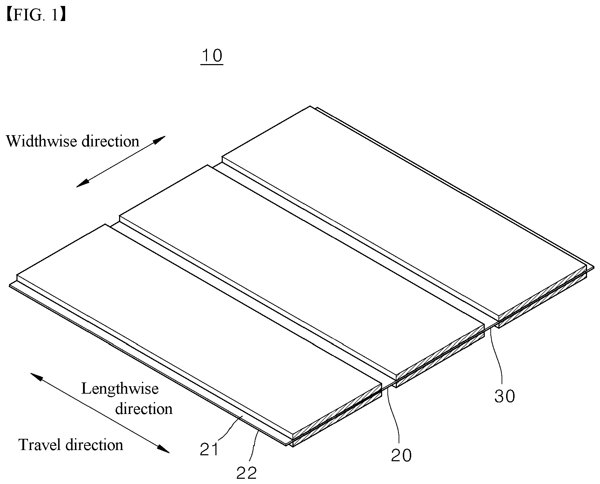

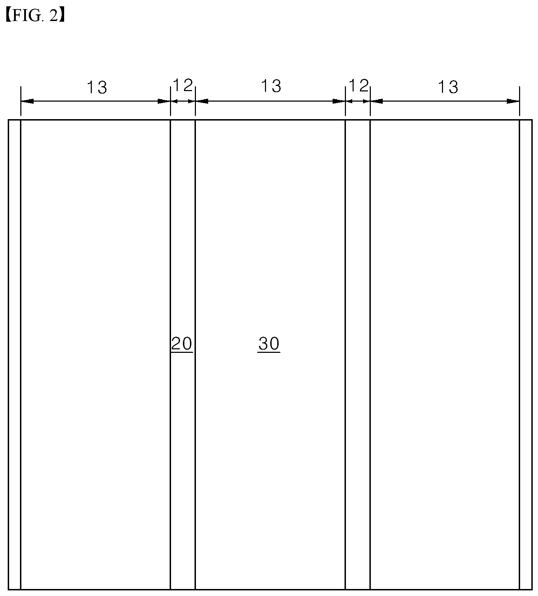

Hereafter, an example of an electrode to be used in the electrode manufacturing device according to the present disclosure is described with reference to FIGS. 1 and 2. An electrode 10 comprises a metal foil 20 formed into a sheet that has a predetermined width and is elongated in a lengthwise direction. An active material layer 30 is applied or coated on a first surface 21 and a second surface 22 that are the upper surface and the back surface of the metal foil.

The active material layer 30 may be applied to at least any one of the first surface 21 and the second surface 22. In the embodiment, a structure in which the active material layer is applied to the two surfaces is provided as an example.

When the active material layer 30 is applied to the surface of the metal foil 20, the surface may have an area where the active material layer 30 is applied and an area where the active material layer 30 is not applied. At this time, between the coating 13 area where the active material layer 30 is applied, one or two or more uncoating 12 areas to which the active material layer 30 is not applied are elongated in the lengthwise direction. Additionally, the uncoating 12 area and the coating 13 area on the first surface 21 and the second surface 22 may be formed in mutually corresponding positions.

In the embodiment, two lanes of the uncoating 12 are provided in the active material layer 30 in the widthwise direction thereof, for example. However, the number of lanes of the uncoating 12 may vary. That is, one or more lanes of the uncoating 12 may be provided. In the case where a plurality of lanes of the uncoating 12 is provided, a plurality of the uncoating 12 area may be spaced from one another, along the widthwise direction of the electrode.

As a result, the coating 13 area and the uncoating 12 area may have a constant width and be elongated in the travel direction (lengthwise direction) of the electrode.

In the electrode 10, the uncoating 12 area has a thickness less than that of the coating 13 area.

The electrode 10 may constitute a positive plate or a negative plate of a secondary battery.

In the present disclosure, an anode active material coated on a positive plate, and a cathode active material coated on a negative plate can be used regardless of their sorts, as long as the active materials are well known to one having ordinary skill in the art.

The anode active material may include a layered compound or compound substituted with one or more transition metals such as lithium cobalt oxide (LiCoO₂) and lithium nickel oxide (LiNiO₂); lithium manganese oxides (LiMnO₂) such as the chemical formula Li₁₊ₓMn₂ₓO₄ (where x is 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; Ni site type lithium nickel oxides expressed by the chemical formula LiNi₁₋ₓMₓO₂ (where M is Co, Mn, Al, Cu, Fe, Mg, B, or Ga and x is 0.01 to 0.3); lithium manganese composite oxides expressed by the chemical formula LiMn₂₋ₓMₓO₂ (where M=Co, Ni, Fe, Cr, Zn, or Ta and x=0.01 to 0.1) or Li₂Mn₃MO₈ (where M=Fe, Co, Ni, Cu, or Zn); LiMn₂O₄ in which Li in the formula is partially substituted with alkaline earth metal ions; a disulfide compound; and Fe₂(MoO₄)₃, or a compound whose main component is a lithium intercalation material such as a composite oxide formed by a combination thereof. Although the above types are used as the anode active material, the subject matter of the present disclosure is not limited thereto.

For example, the positive electrode current collector has a thickness of 3 to 500 µm. The positive electrode current collector is not limited as long as it has conductivity without causing a chemical change in a battery. Examples of the positive electrode current collector may include stainless steel, aluminum, nickel, titanium, calcined carbon, or aluminum or stainless steel the surface of which is treated with carbon, nickel, titanium, silver, or the like. The electrode current collector may have fine irregularities formed in the surface thereof to increase adhesion between the electrode current collector and the anode active material. The electrode current collector may be used in various forms such as a film, a sheet, a foil, a net, a porous body, a foamed body, a non-woven fabric body, and the like.

A conductive material may be additionally mixed with anode active material particles. The conductive material is added in an amount of 1 to 50 wt% based on the total weight of the mixture including the anode active material. The conductive material is not limited as long as it has high conductivity without causing a chemical change in a battery. Examples of the conductive material may include graphite such as natural graphite and artificial graphite; carbon black such as carbon black, acetylene black, Ketjen black, channel black, furnace black, lamp black, and thermal black; conductive fibers such as carbon fiber and metal fiber; metal powders such as carbon fluoride, aluminum, and nickel powders; conductive whiskers such as zinc oxide and potassium titanate; conductive oxides such as titanium oxide; and conductive materials such as a polyphenylene derivative.

Further, the negative electrode sheet may be fabricated by applying and drying negative electrode active material particles on a negative electrode current collector, and may further include components such as the conductive material described above, a binder, a solvent, and the like as needed.

For example, the negative electrode current collector has a thickness of 3 to 500 µm. The negative electrode current collector is not limited as long as it has conductivity without causing a chemical change in a battery. Examples of the negative electrode current collector may include copper, stainless steel, aluminum, nickel, titanium, calcined carbon, aluminum or stainless steel whose surface has been treated with carbon, nickel, titanium, silver, or the like, an aluminum-cadmium alloy, or the like. In addition, like the positive electrode current collector, fine irregularities may be formed in the surface to enhance the binding force of the negative electrode active material, and may be used in various forms such as a film, a sheet, a foil, a net, a porous body, a foamed body, a nonwoven fabric body, and the like.

Examples of the negative electrode active material may include a carbon such as non-graphitized carbon or graphite-based carbon; a metal complex oxide such as LiₓFe₂O₃ (0<=x<=1), LiₓWO₂ (0<=x<=1), SnₓMe₁₋ₓMe'yO_{z} (Me: Mn, Fe, Pb, Ge; Me' : Al, B, P, Si, elements in Group I, II, and III on the periodic table, a halogen; 0 <x<=1); 1<=y<=3; 1 <= z <= 8); a lithium metal; a lithium alloy; a silicon-based alloy; a tin-based alloy; an oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer such as polyacetylene; a Li-Co-Ni-based material, or the like.

A binder polymer capable of being used in the electrode sheets 11 and 12 is a component that assists in bonding the electrode active material particles and the conductive material and binding the electrode active material particles to the electrode current collector, and added in an amount of, for example, 1 to 50 wt% based on the total weight of the mixture including the electrode active material particles. Examples of the binder polymer may include at least one binder polymer selected from the group consisting of polyvinylidene fluoride-co-hexafluoropropylene (PVdF-HFP), polyvinylidene fluoride-co-trichloroethylene, polymethylmethacrylate, polybutylacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose, or a mixture of two or more thereof, but the present invention is not limited thereto.

Non-limiting examples of the solvent used in the manufacturing of the electrodes include acetone, tetrahydrofuran, methylene chloride, chloroform, dimethylformamide, N-methyl-2-pyrrolidone (NMP), cyclohexane, water, or a mixture thereof. Such solvents provide an appropriate level of viscosity so that a slurry coating layer can be formed at a desired level on a surface of the electrode current collector.

The negative electrode may include a current collector; and a negative electrode active material layer located on at least one surface of the current collector and including a negative electrode active material, a binder polymer, and a conductive material, wherein the negative active material layer includes a lower layer region in surface contact with the current collector and an upper layer region extending to the surface of the negative electrode active material layer while in surface contact with the lower layer region. The lower layer region and the upper layer region may each independently include at least one of graphite and a silicon-based compound as an anode active material.

The lower layer region may include natural graphite as an anode active material, and the upper layer region may include artificial graphite as an anode active material.

Each of the lower layer region and the upper layer region may independently further include a silicon-based compound as an anode active material.

The silicon-based compound may include at least one of SiOₓ (0≤x≤2) and SiC.

In one embodiment, to manufacture the negative electrode, a slurry for a lower layer comprising a cathode active material for a lower layer, is applied entirely to a current collector and dried, and a lower layer region is formed, and then a slurry for an upper layer comprising a cathode active material for an upper layer is applied onto the lower layer region and dried, and an upper layer region is formed.

In one embodiment of the present disclosure, the negative electrode may be manufactured based on a method comprising: preparing a slurry for a lower layer comprising a cathode active material for a lower layer, and a slurry for an upper layer comprising a cathode active material for an upper layer;
coating the slurry for a lower layer on one surface of a negative current collector, and at the same time or after predetermined time, coating the slurry for an upper layer on the slurry for a lower layer; and
drying the coated slurry for a lower layer and the coated slurry for an upper layer at the same time and forming an active material layer.

In the latter manufacturing method, there may be an intermixing region where active materials of different sorts are mixed, in a portion of the negative electrode, wherein the lower layer region and the upper layer region contact each other. In the case where the slurry for a lower layer comprising a cathode active material for a lower layer and the slurry for an upper layer comprising a cathode active material for an upper layer are coated on a current collector, at the same time or one after another with very little time between them, and then dried at the same time to form an active material layer, a predetermined intermixing section is formed on the interface where the slurry for a lower layer and the slurry for an upper layer contact each other before they are dried, and then the intermixing section is formed into a layer of the intermixing region while the slurry for a lower layer comprising a cathode active material for a lower layer and the slurry for an upper layer comprising a cathode active material for an upper layer are dried.

In the cathode active material layer of one embodiment of the present disclosure, a weight ratio (or a ratio of loaded amount per unit surface area) between the upper layer region and the lower layer region may be 20:80 to 50:50, specifically, 25:75 to 50:50.

The thickness of the lower layer region and the upper layer region of the cathode active material layer in the present disclosure may not definitely match the thickness of the coated slurry for a lower layer and the coated slurry for an upper layer. However, a ratio of the thickness of the lower layer region to the thickness of the upper layer region of the cathode active material layer in the present disclosure, finally obtained after drying or selective rolling, may match a ratio of the thickness of the coated slurry for a lower layer and the coated slurry for an upper layer.

The first slurry is coated, and the second slurry is coated on the first slurry at the same time, or one after another with a predetermined time difference between them. In one embodiment, the predetermined time difference may be 0.6 or less second, or 0.02 to 0.6 second, or 0.02 to 0.06 second, or 0.02 to 0.03 second. The time difference at a time of coating the first slurry and the second slurry is caused by a coating apparatus. It is preferable to coat the first slurry and the second slurry at the same time. A device such as a double slot die and the like may be used to coat the second slurry on the first slurry.

In the step of forming an active material layer, rolling the active material layer may be further included after the drying step. At this time, rolling may be performed based on a method such as roll pressing commonly used in the art, and for example, performed at 1 to 20 MPa and 15 to 30°C.

The step of forming an active material layer by drying the coated slurry for a lower layer and the coated slurry for an upper layer at the same time is performed with a device where a hot air drier and an infrared drier are combined, based on a method commonly used in the art.

The weight % of a first binder polymer in the solids of the slurry for a lower layer may be the same or greater than the weight % of a second binder polymer in the solids of the slurry for an upper layer. In one embodiment, the weight % of the first binder polymer in the solids of the slurry for a lower layer may be 1.0 to 4.2 times, or 1.5 to 3.6 times, or 1.5 to 3 times greater than the weight % of the second binder polymer in the solids of the slurry for an upper layer.

At this time, in the case where a ratio of the weight % of the first binder in the coated slurry for a lower layer to the weight % of the second binder in the coated slurry for an upper layer is within the above-mentioned range, the separation of an electrode layer does not occur since the binder in the lower layer region is not that little, and the resistance of the upper layer portion of an electrode decreases, and rapid charge performance may improve, since the binder of the upper layer region is not that great.

In the solids of the slurry for a lower layer, the weight % of the first binder polymer may be 2 to 30 wt% or 5 to 20 wt% or 5 to 20 wt%, and in the solids of the slurry for an upper layer, the rate (wt %) of the second binder polymer may be 0.5 to 20 wt%, or 1 to 15 wt%, or 1 to 10 wt%, or 2 to 5 w%.

A total rate (wt%) of the first binder polymer and the second binder polymer in the entire solids of the supply for a lower layer and the supply for an upper layer may be 2 to 20 wt% or 5 to 15 wt%.

### <Electrode manufacturing device>

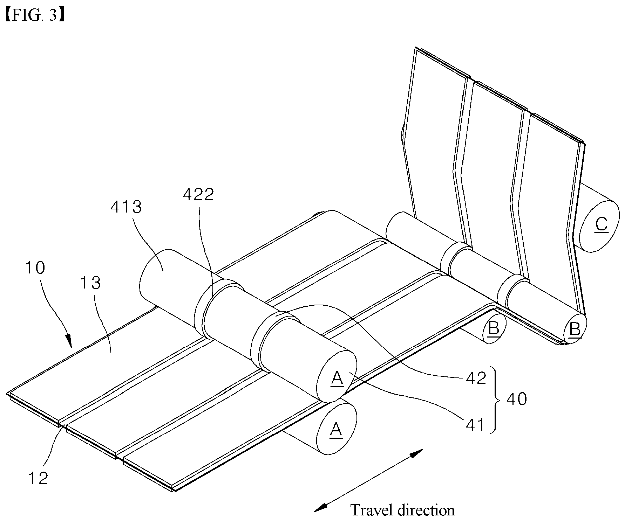

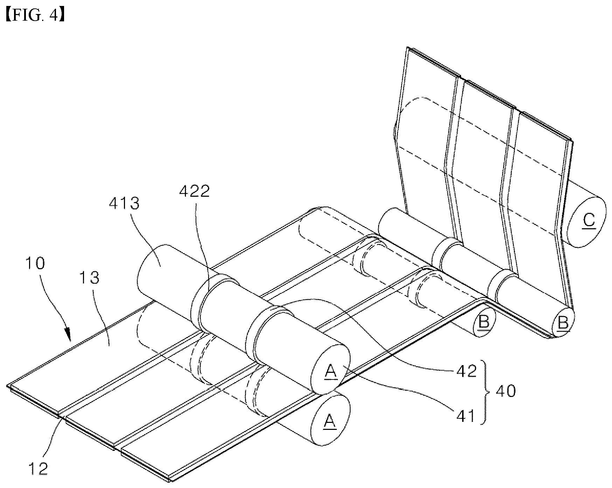

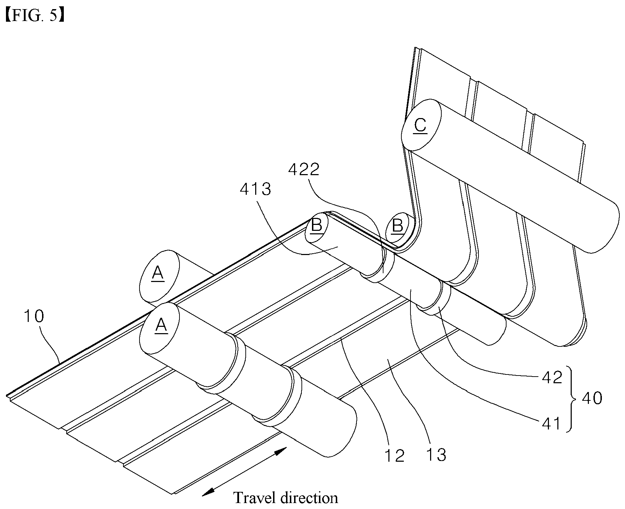

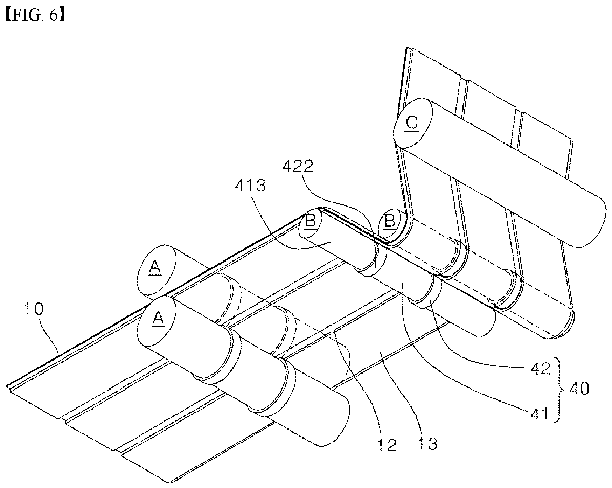

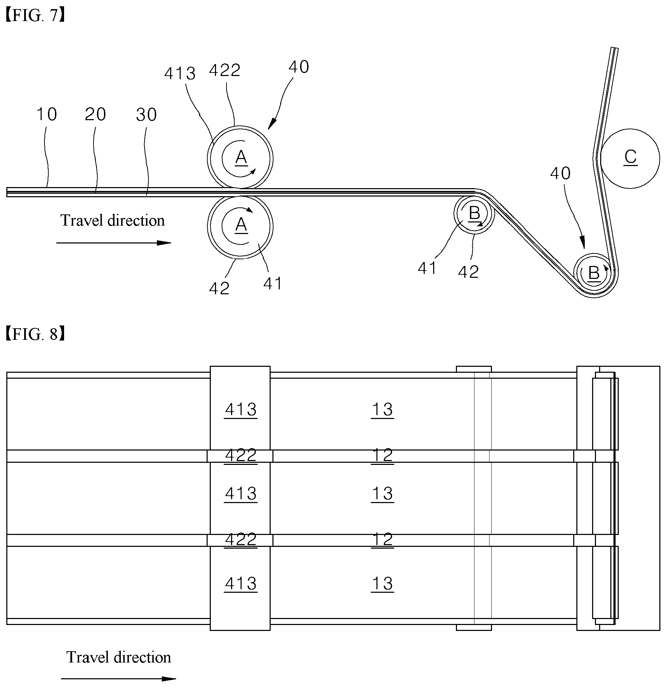

Hereafter, an electrode manufacturing device that performs rolling based on roll pressing in the present disclosure is described with reference to FIGS. 3 to 8.

The electrode manufacturing device in the present disclosure may comprise a rolling roll A that rolls the sheet-shaped electrode 10, a travel roll B that transfers the electrode 10, a tension roll C that adjusts the tension of the electrode 10. The travel roll B can be present prior to the rolling roll A. However, a roll 40 shape in the present disclosure can be present after the rolling roll A. In the embodiment, the travel roll B and the tension roll C are described after the rolling roll A.

In the embodiment, a pair of rolling rolls A are provided side by side. The electrode 10 may be rolled while passing between the pair of rolling rolls A.

At least one or a plurality of travel rolls B may be provided. Each of the travel rolls B may contact any one of the first surface 21 and the second surface 22 of the electrode. The arrangement of the travel roll B and the tension roll C illustrated in the embodiment is provided as an example, and certainly, the technical scope of the present disclosure is not limited to the arrangement of the rolls.

The rolling roll A and the travel roll B following the rolling roll A may be provided with a base surface 413 having a predetermined diameter, and a step surface 422 having a greater diameter than the base surface 413.

The step surface 422 may be provided in a ring shape, in a position corresponding to the position of the uncoating 12 area of the electrode 10 traveling in the electrode manufacturing device.

The base surface 413 and the step surface 422 may be provided at the roll 40 that is manufactured as one component.

Alternatively, a roll 40 may be provided in a way that a component providing the base surface 413 and a component providing the step surface 422 are manufactured individually and combined.

The base surface 413 is defined by the outer circumferential surface of a base roll 41 having a predetermined diameter. That is, the base surface 413 having a cylinder shape may be provided at the outer circumference of the base roll 41.

The step surface 422 is defined by a step ring 42 coupled to the outer circumference of the base roll 41. That is, the step ring 42 may be provided with a step surface 422 having an outer circumferential surface that has a greater diameter than the base surface 413.

In the case where the base roll 41 and the step ring 42 are manufactured as a different component, as described above, the base roll 41 and the step ring 42 may be made of a different material. Materials different from each other exhibit their unique properties. For example, the base roll 41 and the step ring 42 may be made of a different material exhibiting a different modulus of elasticity, may be based on a different material (metal, synthetic resins and the like), and may be made of a different material exhibiting different properties such as ductility, a thermal expansion coefficient and the like.

A step between the base surface 413 and the step surface 422, i.e., a difference in their diameters, may substantially correspond to a step between the coating 13 and the uncoating 12, i.e., a step between the surface of the active material layer 30 and the surface of the exposed metal foil 20, i.e., a difference in their heights.

Accordingly, the base surface 413 may contact the surface of the coating 13, and the step surface 422 may contact the surface of the uncoating 12.

Additionally, the position of the base roll 41, on which the step ring 42 is disposed, may correspond to the position of the uncoating 12 area of the electrode 10, which is contacted by the roll 40.

The width of the step ring 42 may correspond to the width of the uncoating 12 area corresponding to the step ring 42, or may be 1 mm or so that is less than the width of the uncoating 12 area.

A frictional coefficient measured on the surface of the step surface 422 provided at the outer circumference of the step ring 42 may differ from the frictional coefficient of the base surface 413 provided at the outer circumference of the base roll 41.

Likewise, the frictional coefficient of the surface of the coating 13 of the electrode 10 may differ from the frictional coefficient of the surface of the uncoating 12 of the electrode 10.

A difference between the frictional coefficient of the step surface 422 and the frictional coefficient of the base surface 413, and a difference between the frictional coefficient of the surface of the uncoating 12 and the frictional coefficient of the surface of the coating 13 may be complementary.

For example, in the case where the frictional coefficient of the coating 13 is greater than the frictional coefficient of the uncoating 12, the frictional coefficient of the step surface 422 may be greater than the frictional coefficient of the base surface 413.

Additionally, the frictional coefficient of the step surface 422 may be greater than the frictional coefficient of the base surface 413 by a difference between the frictional coefficient of the coating 13 and the frictional coefficient of the uncoating 12, for example.

Accordingly, like a frictional force that is applied when the active material layer 30 is pressurized by the base surface 413, a frictional force may be applied as the metal foil 20 is pressurized by the step surface 422. Thus, when the electrode 10 is rolled while passing the rolling roll A, a difference in the rolling rates of the coating 13 and the uncoating 12 may decrease further.

The elastic modulus of the step ring 42 may be less than the elastic modulus of the base roll 41. For example, the base roll 41 may comprise a first metallic material, and the step ring 42 may comprise a second metallic material softer than the first metallic material. Additionally, the base roll 41 may comprise a metallic material, and the step ring 42 may comprise a synthetic resin material. Thus, a difference between the rolling rate of the coating and the rolling rate of the uncoating may decrease further by improving the rolling rate of the uncoating.

In the electrode manufacturing device, while the rolling roll A is comprised of a roll 40 with a step ring 42, and the travel roll B behind the rolling roll A is also comprised of a roll 40 with a step ring 42, two or more travel rolls B are provided, and any one of the travel rolls contacts the first surface 21 of the electrode 10, and the other contacts the second surface of the electrode 10. Accordingly, the deformation of the uncoating 12, which may occur at the rolling roll A, is recovered by the step ring 42 of the travel roll B during the transfer and travel processes.

### < Exchange of roll>

According to the present disclosure, the roll 40 of the electrode manufacturing device may be changed, depending on the dimension and shape of the electrode 10 rolled by the roll 40.

As described above, the position of the step ring 42 is set to correspond to the position of the uncoating 12, and the width of the step ring 42 is set to correspond to the width of the uncoating 12. Accordingly, in the case where there is a change in the number, position or width of the lanes of the uncoating 12 of the electrode 10, applied to the electrode manufacturing device, all the rolls 40 to which the step ring 42 is applied need to be exchanged.

In the roll 40 of the present disclosure 40, the base roll 41 and the step ring 42 are provided as an individual component, and the step ring 42 is provided in a way that the step ring 42 is detachably coupled to the base roll 41.

Thus, as long as the width of the step ring 42 applied to one base roll 41 varies, with no need to individually provide rolls corresponding to electrodes 10 of a different shape, the roll may correspond to an electrode 10 of a different shape. That is, manufacturing a base roll 41 and a step ring 42, made as an individual component and made of a different material, enable fine control of an interaction between the roll 40 and the electrode 10 during the rolling or transfer process and has an advantage in the method in which the roll 40 corresponding to the electrode 10 is provided.

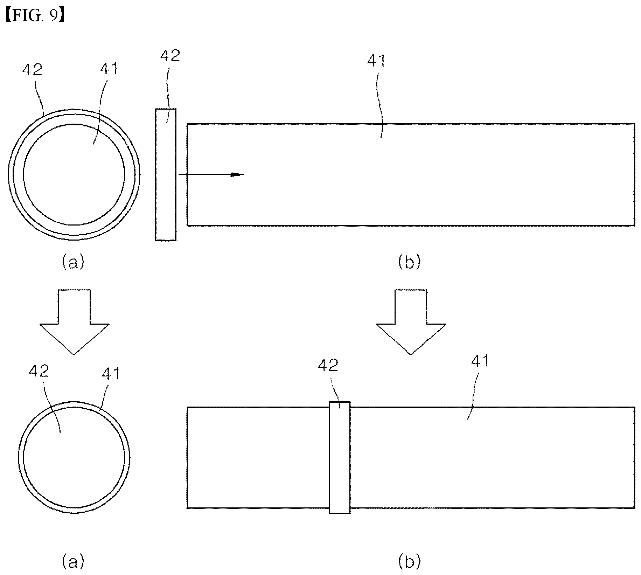

Referring to FIG. 9, a method of coupling the step ring 42 to the base roll 41 may involve fitting the step ring 42 into the base roll 41, in the state where the step ring 42 is elastically deformed and its inner diameter increases, and the step ring 42 is elastically recovered in a way that the inner diameter of the step ring 42 decreases, such that the inner circumferential surface of the step ring 42 is pressed against the outer circumferential surface of the base roll 41.

Referring to FIG. 9, a method of separating the step ring 42 from the base roll 41 in the state where the step ring 42 is coupled to the base roll 41 may involve performing the above-described coupling method in reverse order.

The elastic modulus of the step ring 42 may be low enough to be elastically deformed, and made of a material having a wide range of elastic deformation. For example, the step ring 42 may be a rubber ring.

Then the step ring 42 is fitted into the base roll 41 in the state where the step ring 42 is thermally expanded in a way that the inner diameter of the step ring 42 increases, and is fixed to the base roll 41 by cooling in a way that the inner diameter of the step ring 42 decreases. For convenience of the shrinkage fitting, the base roll 41 may comprise a first metallic material, and the step ring 42 may comprise a second metallic material having a greater thermal expansion coefficient than the first metallic material. The above selection of the materials may enable ease of separation of the step ring 42 coupled to the base roll 41.

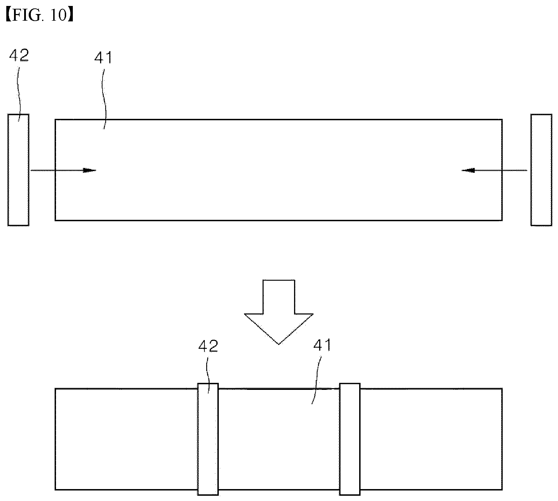

Referring to FIG. 10, the step ring 42 may be press-fitted into the outer circumference of the base roll 41 in an axial direction. For convenience of the press fitting, the step ring 42 may be made of a material softer than that of the base roll 41. Certainly, since the step ring 42 is made of a material softer than that of the base roll 41, the step ring 42 may be easily separated and extruded from the base roll 41.

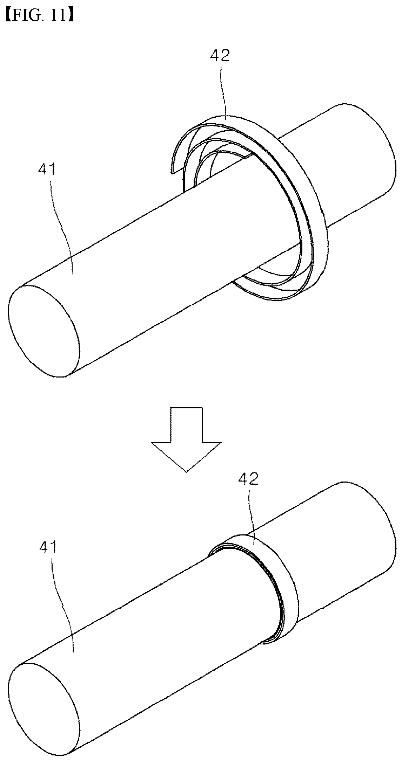

Referring to FIG. 11, the step ring 42 may be coupled to the base roll 41 in a way that a tape or a band surrounds the circumference of the base roll 41 once or a plurality of times. At this time, the step ring 42 may adhere to or be attached to the base roll 41. When the step ring 42 separates from the base roll 41, the adhesion or attachment of the step ring 52 to the base roll 41 may be destroyed.

Accordingly, the method of exchanging the roll 40 of the electrode manufacturing device comprises a step ring removal step of separating the step ring 42 in the state of being coupled to the base roll 41 from the base roll 41, and a step ring re-installment step of coupling another step ring 42 to the base roll 41.

As described above, in the step ring removal step, the step ring 42 may be removed from the base roll 41 in the state where the step ring 42 is elastically or thermally deformed in a way that the diameter of the step ring 42 increases.

Alternatively, the step ring 42 may be extruded from the base roll 41 in the axial direction.

Alternatively, an adhesion or attachment layer between the inner circumferential surface of the step ring 42 and the outer circumferential surface of the base roll 41 may be removed.

In the step ring re-installment step, the step ring 42 may be fitted into the base roll 41 in the state where the step ring 42 is elastically or thermally deformed in a way that the diameter of the step ring 42 increases.

Alternatively, the step ring 42 may be press-fitted into the base roll 41 in the axial direction.

Alternatively, the inner circumferential surface of the step ring 42 and the outer circumferential surface of the base roll 41 may adhere or be attached to each other.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope of the present invention as defined by the appended claims.
Further, although the operating effects according to the configuration of the present invention are not explicitly described while describing an embodiment of the present invention, it should be appreciated that predictable effects are also to be recognized by the configuration.

## Claims

1. An electrode manufacturing device for rolling and transferring a sheet-shaped electrode (10) in which an active material layer (30) is applied to a metal foil (20) with a first surface (21) and a second surface (22) which is a back surface of the first surface (21), comprising:
a rolling roll (A) for rolling the electrode (10);
at least one travel roll (B) for rolling and then transferring the electrode (10);
both the rolling roll (A) and the at least one travel roll (B) comprising:
a base roll (41) having a predetermined diameter, and having a base surface (413) at an outer circumference thereof; and
a step ring (42) coupled to the outer circumference of the base roll (41), and having a step surface (422), a diameter of the step ring (42) being greater than a diameter of the base surface (413).

2. The electrode manufacturing device of claim 1, wherein the at least one travel roll (B) is a plurality of travel rolls (B), and
wherein among the plurality of travel rolls (B), one or more first travel rolls (B) being disposed near the rolling roll (A) are provided with both the base roll (41) and the step ring (42), and second travel rolls (B) being disposed behind the one or more first travel rolls (B) in a travel direction of the electrode (10) are not provided with the step ring (42).

3. The electrode manufacturing device of claim 1, wherein the step ring (42) is detachably coupled to the base roll (41).

4. The electrode manufacturing device of claim 1, wherein a frictional coefficient at an outer circumference of the step ring (42) is greater than a frictional coefficient at the outer circumference of the base roll (41).

5. The electrode manufacturing device of claim 1, wherein a thickness of a step between the step surface (422) and the base surface (413) is less than a thickness of the active material layer (30).

6. The electrode manufacturing device of claim 1, wherein a frictional coefficient at an outer circumference of the step ring (42) is less than a frictional coefficient at the outer circumference of the base roll (41).

7. The electrode manufacturing device of claim 1, wherein a thickness of a step between the step surface (422) and the base surface (413) is greater than a thickness of the active material layer (30).

8. The electrode manufacturing device of claim 1, wherein an elastic modulus of the step ring (42) is less than an elastic modulus of the base roll (41).

9. The electrode manufacturing device of claim 1, wherein the base roll (41) comprises a metallic material, and the step ring (42) comprises a synthetic resin material.

10. The electrode manufacturing device of claim 1, wherein the base roll (41) comprises a first metallic material, and the step ring (42) comprises a second metallic material that is softer than the first metallic material.

11. The electrode manufacturing device of claim 1, wherein the step ring (42) is a band wound around the outer circumference of the base roll (41) at least once.

## Patentansprüche

1. Elektrodenherstellungsvorrichtung zum Walzen und Übertragen einer folienförmigen Elektrode (10), in der eine Aktivmaterialschicht (30) auf eine Metallfolie (20) mit einer ersten Oberfläche (21) und einer zweiten Oberfläche (22), die eine Rückfläche der ersten Oberfläche (21) ist, aufgebracht ist, aufweisend:
eine Walzenrolle (A) zum Walzen der Elektrode (10);
mindestens eine Bewegungsrolle (B) zum Walzen und dann Übertragen der Elektrode (10);
wobei sowohl die Walzenrolle (A) als auch die mindestens eine Bewegungsrolle (B) aufweisen:
eine Basisrolle (41) mit einem vorbestimmten Durchmesser und mit einer Basisfläche (413) an einem Außenumfang davon; und
einen Stufenring (42), der mit dem Außenumfang der Basisrolle (41) gekoppelt ist und eine Stufenfläche (422) aufweist, wobei ein Durchmesser des Stufenrings (42) größer als ein Durchmesser der Basisfläche (413) ist.

2. Elektrodenherstellungsvorrichtung nach Anspruch 1, wobei die mindestens eine Bewegungsrolle (B) mehrere Bewegungsrollen (B) umfasst, und
wobei unter den mehreren Bewegungsrollen (B) eine oder mehrere erste Bewegungsrollen (B), die nahe der Walzenrolle (A) angeordnet sind, sowohl mit der Basisrolle (41) als auch dem Stufenring (42) versehen sind, und zweite Bewegungsrollen (B), die hinter der einen oder den mehreren ersten Bewegungsrollen (B) in einer Bewegungsrichtung der Elektrode (10) angeordnet sind, nicht mit dem Stufenring (42) versehen sind.

3. Elektrodenherstellungsvorrichtung nach Anspruch 1, wobei der Stufenring (42) lösbar mit der Basisrolle (41) gekoppelt ist.

4. Elektrodenherstellungsvorrichtung nach Anspruch 1, wobei ein Reibungskoeffizient an einem Außenumfang des Stufenrings (42) größer als ein Reibungskoeffizient an dem Außenumfang der Basisrolle (41) ist.

5. Elektrodenherstellungsvorrichtung nach Anspruch 1, wobei eine Dicke einer Stufe zwischen der Stufenfläche (422) und der Basisfläche (413) kleiner als eine Dicke der Aktivmaterialschicht (30) ist.

6. Elektrodenherstellungsvorrichtung nach Anspruch 1, wobei ein Reibungskoeffizient an einem Außenumfang des Stufenrings (42) kleiner als ein Reibungskoeffizient an dem Außenumfang der Basisrolle (41) ist.

7. Elektrodenherstellungsvorrichtung nach Anspruch 1, wobei eine Dicke einer Stufe zwischen der Stufenfläche (422) und der Basisfläche (413) größer als eine Dicke der Aktivmaterialschicht (30) ist.

8. Elektrodenherstellungsvorrichtung nach Anspruch 1, wobei ein Elastizitätsmodul des Stufenrings (42) kleiner als ein Elastizitätsmodul der Basisrolle (41) ist.

9. Elektrodenherstellungsvorrichtung nach Anspruch 1, wobei die Basisrolle (41) ein metallisches Material aufweist und der Stufenring (42) ein synthetisches Harzmaterial aufweist.

10. Elektrodenherstellungsvorrichtung nach Anspruch 1, wobei die Basisrolle (41) ein erstes metallisches Material aufweist und der Stufenring (42) ein zweites metallisches Material aufweist, das weicher als das erste metallische Material ist.

11. Elektrodenherstellungsvorrichtung nach Anspruch 1, wobei der Stufenring (42) ein Band ist, das mindestens einmal um den Außenumfang der Basisrolle (41) gewickelt ist.

## Revendications

1. Dispositif de fabrication d'électrodes pour le laminage et le transfert d'une électrode en forme de feuille (10) dans laquelle est appliquée une couche de matière active (30) sur une feuille métallique (20) avec une première surface (21), et une deuxième surface (22) qui est le revers de la première surface (21), comprenant :
un cylindre de laminage (A) pour laminer l'électrode (10) ;
au moins un cylindre de roulement (B) pour le laminage puis le transfert de l'électrode (10) ;
le cylindre de laminage (A) et l'au moins un cylindre de roulement (B) comprenant tous les deux :
un cylindre de base (41) au diamètre prédéterminé, et une surface de base (413) sur une circonférence extérieure de celui-ci ; et
une bague à gradin (42) couplée à la circonférence extérieure du cylindre de base (41), et possédant une surface à gradin (422), un diamètre de la bague à gradin (42) étant supérieur à un diamètre de la surface de base (413).

2. Dispositif de fabrication d'électrodes selon la revendication 1, l'au moins un cylindre de roulement (B) étant une pluralité de cylindres de roulement (B), et
parmi la pluralité des cylindres de roulement (B), un ou plusieurs premiers cylindres de roulement (B), disposés près du cylindre de laminage (A), étant agencés avec à la fois le cylindre de base (41) et la bague à gradin (42), et des deuxièmes cylindres de roulement (B) étant disposés derrière l'un ou plusieurs cylindres de roulement (B) dans une direction de déplacement de l'électrode (10) n'étant pas dotés de la bague à gradin (42).

3. Dispositif de fabrication d'électrodes selon la revendication 1, la bague à gradin (42) étant couplée de façon amovible au cylindre de base (41).

4. Dispositif de fabrication d'électrodes selon la revendication 1, un coefficient de friction sur une circonférence extérieure de la bague à gradin (42) étant supérieur à un coefficient de friction sur la circonférence extérieure du cylindre de base (41).

5. Dispositif de fabrication d'électrodes selon la revendication 1, une épaisseur d'un gradin entre la surface de gradin (422) et la surface de base (413) étant inférieure à une épaisseur de la couche de matière active (30).

6. Dispositif de fabrication d'électrodes selon la revendication 1, un coefficient de friction sur une circonférence extérieure de la bague à gradin (42) étant inférieur à un coefficient de friction sur la circonférence extérieure du cylindre de base (41).

7. Dispositif de fabrication d'électrodes selon la revendication 1, une épaisseur d'un gradin entre la surface de gradin (422) et la surface de base (413) étant supérieure à une épaisseur de la couche de matière active (30).

8. Dispositif de fabrication d'électrodes selon la revendication 1, un module d'élasticité de la bague à gradin (42) étant inférieur à un module élastique du cylindre de base (41).

9. Dispositif de fabrication d'électrodes selon la revendication 1, le cylindre de base (41) comprenant un matériau métallique, et la bague à gradin (42) comprenant un matériau en résine synthétique.

10. Dispositif de fabrication d'électrodes selon la revendication 1, le cylindre de base (41) comprenant un premier matériau métallique, et la bague à gradin (42) comprenant un deuxième matériau métallique plus doux que le premier matériau métallique.

11. Dispositif de fabrication d'électrodes selon la revendication 1, la bague à gradin (42) étant une bande enroulée autour de la circonférence extérieure du cylindre de base (41) au moins une fois.
